# EUROPEAN PATENT SPECIFICATION

(11) **EP 4 034 425 B1**
(45) Date of publication and mention of the grant of the patent: **26.03.2025**
(21) Application number: 20793144.5
(22) Date of filing: 23.09.2020
(51) Int. Cl.: B60R 3/02, B60R 19/48

(54) **IMPROVED TILTABLE FOOTBOARD SYSTEM FOR HEAVY VEHICLE**
VERBESSERTES KIPPBARES TRITTBRETT FÜR SCHWERLASTFAHRZEUGE
SYSTÈME DE MARCHEPIED INCLINABLE AMÉLIORÉ POUR VÉHICULE LOURD

(30) Priority: 23.09.2019 IT 201900017009
(43) Date of publication of application: 03.08.2022
(60) Divisional application: 24206055.6
(73) Proprietor: IVECO S.P.A., 10156 Torino (IT)
(72) Inventor: PACCONI, Angelo, 10040 La Loggia (TO) (IT)
(74) Representative: Studio Torta S.p.A.
(86) International application number: PCT/IB2020/058890
(87) International publication number: WO 2021/059159

(56) References cited:
- CN-A- 102 407 818
- CN-Y- 200 973 932
- JP-A- 2008 260 478
- US-A- 3 517 942
- US-A1- 2003 094 781
- US-A1- 2013 154 229

## Description

### TECHNICAL FIELD

The invention relates to a footboard system for a heavy vehicle, in particular to a front tiltable footboard system for a heavy vehicle.

### BACKGROUND ART

Tiltable footboards are known, which are integrated in the front part of a heavy vehicle, for example a truck or a bus, and are configured to assume a first closed position, in which they are continuous with the profile of the front bumper of the vehicle, and a second open position, in which they define a step relative to the profile of the front bumper of the vehicle.

Said step is normally used by the operator of the vehicle in order to access the upper front part of the vehicle, for example the windshield thereof. In particular, the tiltable footboard is hinged to the front bumper, so that it can move from the aforesaid first position to the aforesaid second position.

Examples of tiltable footboards of this type are disclosed in patent applications IT 1107039 or EP 0885776.

However, these footboards are hard to be moved, since they usually are large-sized and are at least partially made of a metal or high-density material.

Hence, since these footboards are particularly heavy, operators must make a significant physical effort in order to open and close the footboard.

Belts or chain are usually provided, which define limit stops for said footboards. However, these elements can be an impediment during the closing of the footboard and are likely to break, thus making the footboard unable to be used.

Other examples of known tiltable footboards for vehicles are shown in US2013154229 A1, showing the preamble of claim 1, CN200973932 Y, US2003094781 A1, CN102407818 A, JP2008260478 A or US3517942 A.

Therefore, known tiltable footboards need to be improved so as to increase their safety.

The object of the invention is to fulfil the needs discussed above in an economic and optimized fashion.

### SUMMARY OF THE INVENTION

The aforesaid object is reached by means of a vehicle according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1A is a perspective view showing a front portion, in particular a front bumper, of a heavy vehicle comprising a footboard system according to the invention in a first operating step,
- figure 1B is a perspective view showing the footboard system of figure 1A in a second operating step;
- figure 2 is a perspective view showing a portion of the footboard system according to the invention in a first operating step; and
- figure 3 is an enlarged perspective view of a portion of figure 2 in a second operating step.

### DETAILED DESCRIPTION OF THE INVENTION

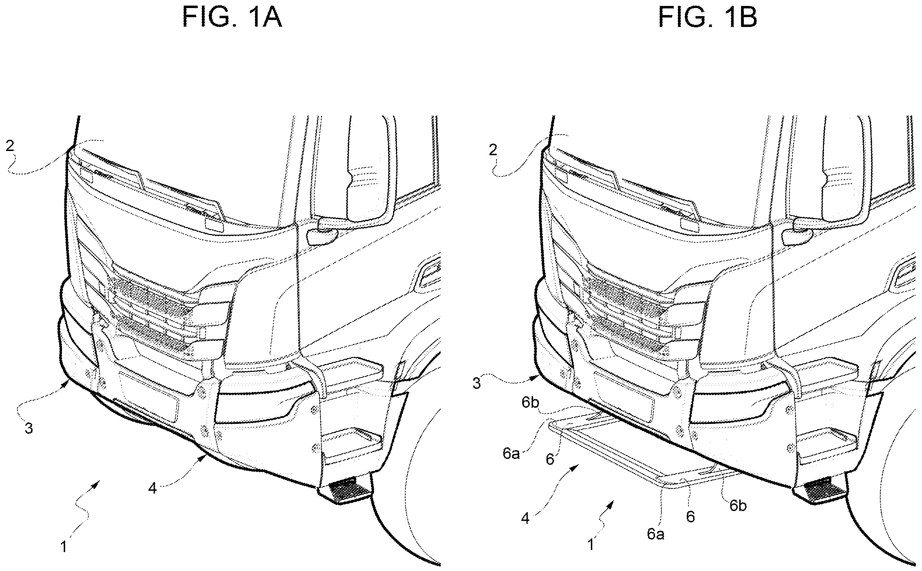

Figures 1A and 1B show a front portion of a heavy vehicle 1, for example a truck, comprising, as it is known, a cabin 2 and provided with a front bumper 3.

The front bumper 3 comprises a tiltable footboard system 4, which is configured to assume a first closed position, in which it is integrated in the front bumper 3, and a second open position, in which it defines a step designed to support the weight of an operator of the vehicle.

In particular, the tiltable footboard system 4 comprises a step 5 and a pair of lateral arms 6. The step 5 and the lateral arms 6 are preferably manufactured as one single piece and made of steel.

More in detail, the arms 6 each comprise an outer end 6a, which is connected to the step 5, and an inner end 6b, which is carried by the frame of the vehicle, namely by the bumper 2, in a movable manner. In particular, the step 5 has a substantially rectangular cross section and is laterally connected to the respective first ends 6a of the arms 6 by means of a joining portion.

The arms 6 preferably have a substantially rectangular cross section and extend parallel to one another and perpendicularly to the longitudinal extension of the step 5. As a consequence, the footboard 4 substantially is, in plan view, "C"-shaped.

With reference to figures 1B, 2 and 3, the inner end portion 6b of each arm 6 comprises an engagement portion 7 defining a movable connection to the bumper 2, as described below.

In particular, the engagement portion 7 defines, with the bumper 2, a hinge 9 and a stop 10. The hinge 9 and the stop 10 are advantageously both defined between the engagement portion 7 and bracket 11 carried by the bumper 2.

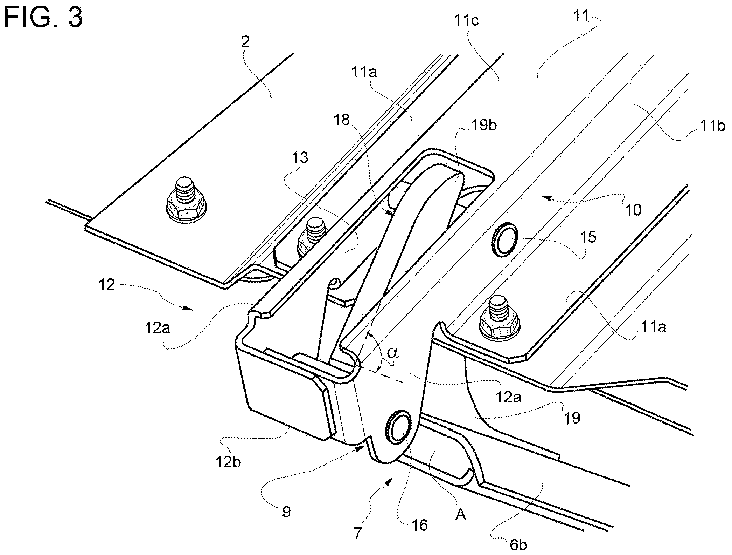

With reference to figure 3 the bracket 11 is "omega"-shaped and, hence, comprises a pair of anchoring walls 11a, a pair of lateral walls 22b, each extending perpendicularly from an inner lateral edge of the respective anchoring wall 11a, and an upper wall 11a joining the lateral walls 11b to one another.

The anchoring walls 11a can conveniently be fixed to an element that is fixed relative to the bumper 2 of the vehicle 1, for example by means of threaded means. Each wall 11a, 11b and 11c has a substantially rectangular cross section and they are manufactured as one single piece, advantageously starting from a metal material.

The bracket 11 further comprises a projecting portion 12 extending towards the inside of the vehicle 1 relative to an inner edge 2a of the bumper 2. Said projecting portion 12 comprises a pair of lateral walls 12a, which are advantageously manufactured in a continuous manner, hence in one single piece, with the lateral walls 11a of the bracket 11.

The projecting portion 12 further comprises a transverse wall 12b connecting the lateral walls 12a to one another in a transverse direction. Said lateral wall 12b advantageously is transverse to them and is preferably defined by the bending of two terminal portions of the lateral walls 12a onto themselves.

The bracket 11 further comprises an opening 13 obtained on the upper wall 11c, preferably with a substantially rectangular shape. The opening 13 advantageously extends along at least the entire projecting extension of the projecting portion 12, i.e. the latter basically comprises, as mentioned above, the lateral walls 12a connected by the transverse wall 12b.

The bracket 11 further comprises a pin 15, which is housed, in a fixed manner relative to the bracket 11, inside the latter and goes through two openings obtained in the lateral walls 11b. In particular, the pin 15 is carried by the bracket 11 in a longitudinal position such that, in a vertical direction, it is entirely under the opening 13.

The bracket 11 also comprises a further pin 16, which is carried by the lateral walls 12a of the projecting portion 12 close to the transverse wall 12b. In particular, said pin 16 is housed in respective openings made in the lateral wall 12a and also is under the opening 13 in a vertical direction.

The pin 16 advantageously is the pin of the hinge 9 obtained with the engagement portion 7. In particular, according to the defined geometry, the hinge 9 allows the inner end 6b of each arm 6 to rotate around a transverse axis A, which is perpendicular to the longitudinal axis of the vehicle 1.

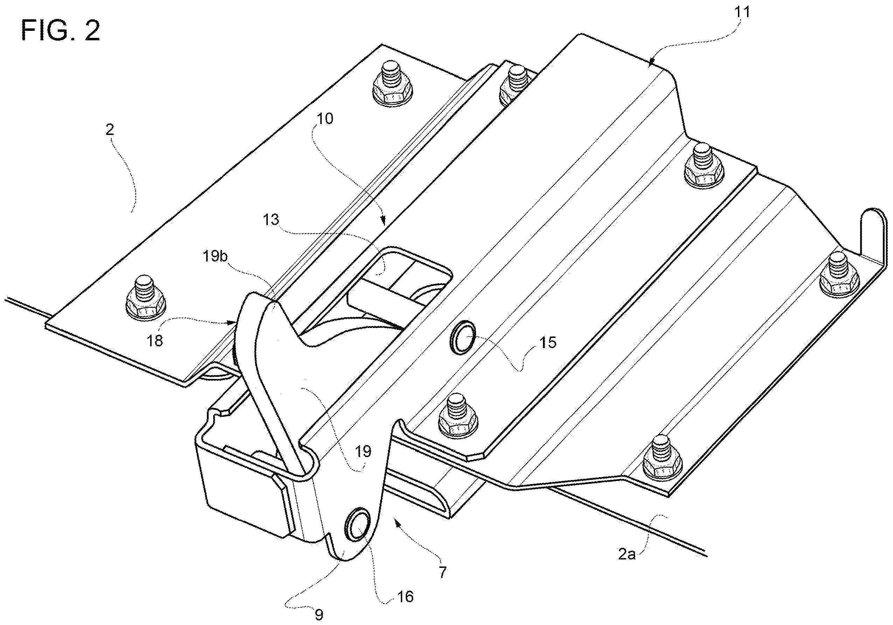

The engagement portion 7 further comprises a hook 18, which is carried by the inner portion 6b and is configured to selectively cooperate in contact with the pin 15 in order to define the stop 10. According to figures 2 and 3, the hook 18 basically comprises a wall 19 extending perpendicularly from the upper surface of the inner end portion 6b towards the bumper 2. In particular, in the case described herein, the wall 19 extends from the middle line relative to the lateral edges of the inner end portion 6b.

In particular, the wall 19 comprises a main portion 19a substantially having the shape of a circle sector, advantageously having an extension angle equal to an angle α, which can be pre-set and indicates the extension of the main portion between the segment having the minimum angular distance, namely in contact with the surface of the end portion 6b, and the segment having the maximum angular distance. In particular, said angle α that can be pre-set, in the case described herein, is 90°.

The wall 19 further comprises a stop portion 19b extending from the main portion 19a, in the area of the maximum height portion, namely at 90° relative to the surface of the arm 6. The dimensions of the main portion 19a and of the stop portion 19b are such that the main portion 19a never cooperates with the pin 15, whereas, after having reached the angle α, the stop portion 19b cooperates with the latter, preventing the relative arm 6 from rotating any further.

Furthermore, the vehicle 1 also comprises selective coupling means (not shown), which are configured to allow the footboard system 4 and the bumper 2 to be coupled in a selective and reversible manner.

For example, the selective coupling means can comprise a shape coupling between the footboard system 4 and its seat in the bumper 2.

The embodiment of the footboard system 4 described above works as follows.

In the closed position (shown in figures 1A and 2), the footboard system 4 is integrated in the bumper 2 and is held in this position thanks to the selective coupling means. In this configuration, the hook 18, i.e. the stop portion 19b of the wall 19, is at the maximum distance from the pin 15.

When, on the other hand, the footboard system 4 is in the open position, the stop portion 19b is in contact with the pin 15 and, hence, keeps the arms 6 still, thus avoiding a further rotation due to the weight of the footboard 4 itself. In this configuration, the arms 6 are inclined relative to the bumper 2 and the step 5 is spaced apart from the latter in order to allow an operator to step onto it.

When the operator wants to shift from the closed position to the open position of the footboard 4, a force simply needs to be applied to the step 5 towards the ground, so that the selective coupling means allow the arms 6 to move around the axis of the hinge 9. The lowering movement continues as long as the rotation of the hook 18 establishes a contact between the stop portion 19b and the pin 15.

On the contrary, when the operator wants to shift from the open position to the closed position, a force simply needs to be applied to the step 5 towards the bumper 2. There are no impediments to the movement of the hook 18 and of the arms 6 and, therefore, the footboard system 4 goes back to the rest position in the bumper 2 and is kept there by the selective coupling means.

Owing to the above, the advantages of a footboard system 4 according to the invention are evident.

The fact that the footboard system 4 comprises an engagement portion 7 defining, at the same time, the rotation by means of a hinge 9 and the maximum opening of the footboard by means of a stop 10 allows for a safe opening of the footboard 4 in a compact manner.

Furthermore, the special elements used as support, namely the bracket 11 and the projecting portion 12, as well as the hook 18 cooperating with them, leads to a stable, compact, safe and versatile system for the opening of the footboard 4.

Indeed, it is sufficient to change the shape of the hook 18 in order to provide a plurality of maximum rotation angles of the step 5, maintaining the same support elements 11 and 12.

Moreover, given the absence of belts or other external support elements, there is not the usual impediment due to their presence.

Finally, the footboard system 4 according to the invention can be subjected to changes and variants, which, though, do not go beyond the scope of protection set forth in the appended claims.

As already mentioned above, the supports given by the brackets 11, 12, the position of the pins 15 and 16 or the shape of hook 18 or of the arms 6 can be changed based on the needs and on the type of vehicle.

## Claims

1. Heavy vehicle comprising a bumper (2) and a tiltable footboard system (4) for said bumper (2), said footboard system (4) comprising a step (5) and at least an arm (6) connecting said step (5) and a support (11,12) fixed with respect to said bumper (2), said at least one arm (6) being configured to bring said step (5) from a first condition wherein it defines a step and a second position wherein it is integrated in said bumper (2), said footboard system (4) comprising an engagement portion (7) defining with said support (11,12) a hinge (9) configured to allow the passage of said step (5) between said first and second position and a stop (10) configured to maintain said step (5) in said second position,
**characterized in that** said support (11,12) comprises an omega-shaped bracket (11) and a projecting portion (12) extending from said bracket (11), said support (11,12) further comprising an opening (13) provided in said projecting portion (12) and at least part of said bracket (11), said engagement portion (7) being at least partially housed in said opening.

2. Vehicle according to claim 1, wherein said arm (6) comprises an outer portion (6a) connected to said step (5) and an inner portion (6b) comprising said engagement portion (7).

3. Vehicle according to claim 1 or 2, wherein said bracket (11) comprises a pin (15) defining with said engagement portion (7) said stop (10) and wherein said projecting portion (12) comprises a respective pin (16) defining a rotation axis of said hinge (9).

4. Vehicle according to any of the preceding claims, wherein said engagement portion (7) comprises a hook (18) comprising a wall (19) extending from said inner end portion (6b) and having a shape such as to permit the rotation of said hinge (9) within a pre-set maximum angle (α), said angle (α) representing the maximum angular extension of said wall (19) with respect to a surface of said inner end portion (6b).

5. Vehicle according to claim 4, wherein said angle (α) is smaller than 180°.

6. Vehicle according to claim 4 or 5, wherein said angle (α) is smaller than or equal to 90°.

7. Vehicle according to one of the claims from 4 to 6, wherein said wall (19) comprises a main portion (19a) having a shape such as not to cooperate in contact with said support (11, 12) in any operating condition of said wall (5).

8. Vehicle according to one of the claims from 4 to 7, wherein said wall (19) comprises a stop portion (19b) having a shape such as to cooperate in contact with said support (11, 12) when the rotation of said hinge (9) reaches said angle (α).

## Patentansprüche

1. Schwerfahrzeug, das einen Stoßfänger (2) und ein neigbares Trittbrettsystem (4) für den Stoßfänger (2) umfasst, wobei das Trittbrettsystem (4) eine Stufe (5) und zumindest einen Arm (6) umfasst, der die Stufe (5) mit einer Stütze (11, 12) verbindet, die mit dem Stoßfänger (2) fest verbunden ist, wobei der mindestens eine Arm (6) eingerichtet ist, um die Stufe (5) von einer ersten Position, in der sie eine Trittfläche bildet, in eine zweite Position, in der sie in den genannten Stoßfänger (2) integriert ist, zu bringen, wobei das Trittbrettsystem (4) einen Eingriffsabschnitt (7) umfasst, der mit der Stütze (11, 12) ein Scharnier (9), das eingerichtet ist, um den Übergang der Stufe (5) zwischen der ersten und der zweiten Position zu ermöglichen, und einen Anschlag (10), der eingerichtet ist, um die Stufe (5) in der zweiten Position zu halten, ausbildet,
**dadurch gekennzeichnet, dass** die Stütze (11, 12) eine omega-förmige Halterung (11) und einen sich von dieser Halterung (11) erstreckenden Vorsprung (12) umfasst, wobei die Stütze (11, 12) ferner eine Öffnung (13) umfasst, die in dem Vorsprung (12) und zumindest in einem Teil der Halterung (11) angeordnet ist, wobei der Eingriffsabschnitt (7) zumindest teilweise in dieser Öffnung aufgenommen ist.

2. Fahrzeug nach Anspruch 1, wobei der Arm (6) einen Außenabschnitt (6a), der mit der Stufe (5) verbunden ist, und einen Innenabschnitt (6b), der den Eingriffsabschnitt (7) umfasst, umfasst.

3. Fahrzeug nach Anspruch 1 oder 2, wobei die Halterung (11) einen Bolzen (15) umfasst, der mit dem Eingriffsabschnitt (7) den Anschlag (10) ausbildet, und wobei der Vorsprung (12) einen jeweiligen Bolzen (16) umfasst, der eine Rotationsachse des Scharniers (9) ausbildet.

4. Fahrzeug nach einem der vorhergehenden Ansprüche, wobei der Eingriffsabschnitt (7) einen Haken (18) umfasst, der eine Wand (19) umfasst, die sich von dem Innenendabschnitt (6b) erstreckt und derart geformt ist, um eine Drehung des Scharniers (9) innerhalb eines vorgegebenen maximalen Winkels (α) zu ermöglichen, wobei der Winkel (α) die maximale Winkelausdehnung der Wand (19) in Bezug auf eine Fläche des Innenendabschnitts (6b) ausbildet.

5. Fahrzeug nach Anspruch 4, wobei der Winkel (α) kleiner als 180° ist.

6. Fahrzeug nach Anspruch 4 oder 5, wobei der Winkel (α) kleiner oder gleich 90° ist.

7. Fahrzeug nach einem der Ansprüche 4 bis 6, wobei die Wand (19) einen Hauptabschnitt (19a) umfasst, der so geformt ist, dass er in keinem Betriebszustand der Wand (5) in Kontakt mit der Stütze (11, 12) zusammenwirkt.

8. Fahrzeug nach einem der Ansprüche 4 bis 7, wobei die Wand (19) einen Anschlagabschnitt (19b) umfasst, der so geformt ist, dass er in Kontakt mit der Stütze (11, 12) zusammenwirkt, wenn die Drehung des Scharniers (9) den Winkel (α) erreicht.

## Revendications

1. Véhicule lourd comprenant un pare-chocs (2) et un système de marchepied inclinable (4) pour ledit pare-chocs (2), ledit système de marchepied (4) comprenant une marche (5) et au moins un bras (6) raccordant ladite marche (5) et un support (11, 12) fixe par rapport audit pare-chocs (2), ledit au moins un bras (6) étant configuré pour amener ladite marche (5) d'une première condition dans laquelle elle définit une marche et une seconde condition dans laquelle elle est intégrée dans ledit pare-chocs (2), ledit système de marchepied (4) comprenant une partie de mise en prise (7) définissant, avec ledit support (11, 12), une charnière (9) configurée pour permettre le passage de ladite marche (5) entre lesdites première et seconde positions et une butée (10) configurée pour maintenir ladite marche (5) dans ladite seconde position,
**caractérisé en ce que** ledit support (11, 12) comprend une console en forme d'oméga (11) et une partie en saillie (12) s'étendant à partir de ladite console (11), ledit support (11, 12) comprenant en outre une ouverture (13) prévue dans ladite partie en saillie (12) et au moins une partie de ladite console (11), ladite partie de mise en prise (7) étant au moins partiellement logée dans ladite ouverture.

2. Véhicule selon la revendication 1, dans lequel ledit bras (6) comprend une partie externe (6a) raccordée à ladite marche (5) et une partie interne (6b) comprenant ladite partie de mise en prise (7).

3. Véhicule selon la revendication 1 ou 2, dans lequel ladite console (11) comprend une broche (15) définissant, avec ladite partie de mise en prise (7), ladite butée (10), et dans lequel ladite partie en saillie (12) comprend une broche (16) respective définissant un axe de rotation de ladite charnière (9).

4. Véhicule selon l'une quelconque des revendications précédentes, dans lequel ladite partie de mise en prise (7) comprend un crochet (18) comprenant une paroi (19) s'étendant à partir de ladite partie d'extrémité interne (6b) et ayant une forme afin de permettre la rotation de ladite charnière (9) dans les limites d'un angle (α) maximum prédéterminé, ledit angle (α) représentant l'extension angulaire maximum de ladite paroi (19) par rapport à une surface de ladite partie d'extrémité interne (6b).

5. Véhicule selon la revendication 4, dans lequel ledit angle (α) est inférieur à 180°.

6. Véhicule selon la revendication 4 ou 5, dans lequel ledit angle (α) est inférieur ou égal à 90°.

7. Véhicule selon l'une des revendications 4 à 6, dans lequel ladite paroi (19) comprend une partie principale (19a) ayant une forme afin de ne pas coopérer en contact avec ledit support (11, 12) dans l'une quelconque des conditions opérationnelles de ladite paroi (5).

8. Véhicule selon l'une des revendications 4 à 7, dans lequel ladite paroi (19) comprend une partie de butée (19b) ayant une forme afin de coopérer en contact avec ledit support (11, 12) lorsque la rotation de ladite charnière (9) atteint ledit angle (α).
